(19) Europäisches Patentamt
European Patent Office
Office européen des brevets

(11) EP 1 985 471 B1

(12) FASCICULE DE BREVET EUROPEEN

(45) Date de publication et mention
de la délivrance du brevet:
08.06.2016 Bulletin 2016/23

(51) Int Cl.:
B60C 19/00 (2006.01)        B60C 19/12 (2006.01)
B60C 5/02 (2006.01)         B29D 30/00 (2006.01)
B29D 30/06 (2006.01)

(21) Numéro de dépôt: 08154345.6

(22) Date de dépôt: 10.04.2008

(54) **Pneumatique à bruit de roulement réduit**

Reifen mit verringertem Rollgeräusch

Tyre with reduced rolling noise

(84) Etats contractants désignés:
AT BE BG CH CY CZ DE DK EE ES FI FR GB GR
HR HU IE IS IT LI LT LU LV MC MT NL NO PL PT
RO SE SI SK TR

(30) Priorité: 26.04.2007 FR 0703118

(43) Date de publication de la demande:
29.10.2008 Bulletin 2008/44

(73) Titulaires:
• **COMPAGNIE GENERALE DES
ETABLISSEMENTS MICHELIN
63000 Clermont-Ferrand (FR)**
• **MICHELIN Recherche et Technique S.A.
1763 Granges-Paccot (CH)**

(72) Inventeurs:
• **Merino, Jose
63200, RIOM (FR)**
• **Bestgen, Luc
63140, CHATEL-GUYON (FR)**

(74) Mandataire: **Dequire, Philippe Jean-Marie Denis
M.F.P. Michelin
23, place des Carmes-Déchaux
DGD/PI - F35 - Ladoux
63040 Clermont-Ferrand Cedex 09 (FR)**

(56) Documents cités:
WO-A1-2006/013681    DE-A1- 4 001 753
DE-A1- 10 220 193    DE-A1- 10 255 167
GB-A- 2 321 886      US-A- 4 392 522
US-A- 4 399 851

## Description

### Domaine de l'invention

L'invention concerne un pneumatique dont le bruit de roulement est réduit dans le véhicule ce qui confère un confort amélioré.

### État de la technique

De nombreux bruits polluent l'environnement d'un véhicule. Certains sont dus aux pneumatiques. Parmi cette catégorie, une partie du spectre qui est particulièrement gênante est le mode de cavité. Le mode de cavité est la mise en résonance de la colonne de l'air interne du pneumatique.

La gamme de fréquences du bruit intérieur dans le véhicule qui sont en relation avec le pneumatique en roulage est de 80 à 500 Hz. La fréquence du mode de cavité est fonction de la dimension du pneumatique. A très faible vitesse, le pic du premier mode de cavité (PMC) est d'autour de 230 Hz.

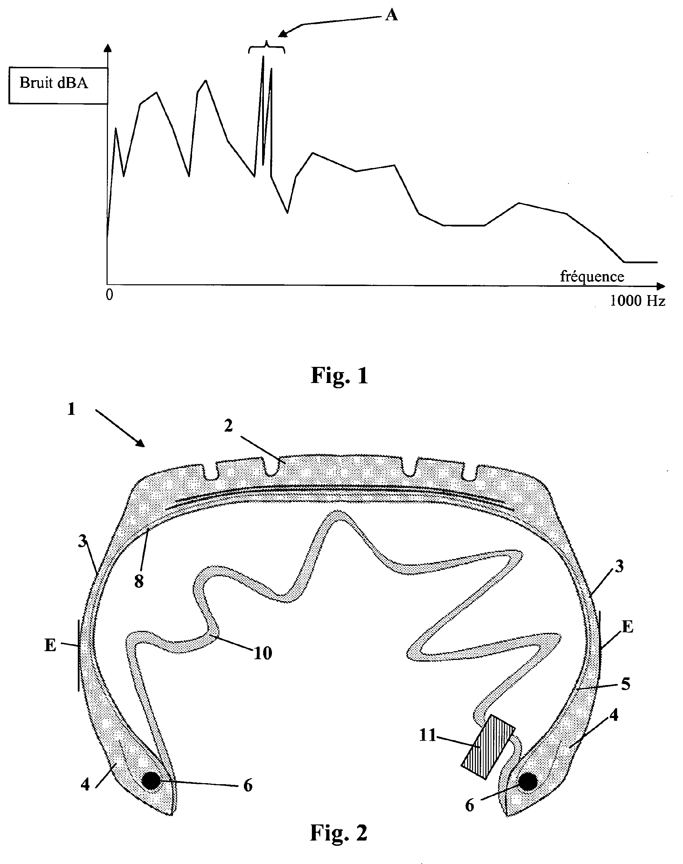

En roulage, deux pics apparaissent. A 80 km/h, les fréquences de ces pics sont de 210 et 250 Hz approximativement. La figure 1 montre bien ces fréquences. D'un point de vue du confort subjectif, les pics du PMC sont gênants car très audibles.

Il est connu que disposer des éléments mobiles à l'intérieur du pneumatique peut avoir un effet positif sur le bruit intérieur, amortissant en particulier le premier mode de cavité. Le document EP 1 214 205 B1 illustre bien ce principe. Des particules de matériaux à cellules ouvertes sont disposées dans la cavité du pneumatique.

D'autres méthodes concernent des « poils » à l'intérieur de la cavité, par exemple tel que présenté dans le document US 6 343 843.

Autrement, le remplissage de la cavité par une mousse ou un autre matériau, tel que du sable est présenté dans le document US 2001/0004924.

US 4 252 378 décrit un agencement dans lequel la jante est remplie avec une mousse.

EP 1 510 366 A1 décrit un agencement avec un corps amortissant le bruit disposé sous la zone du sommet.

DE 102 20 193, conforme au préambule de la revendication 1, décrit un pneumatique comportant une paroi absorbante disposée dans la cavité interne du pneumatique, liée aux deux bourrelets et non liée à la paroi interne ailleurs. Cette paroi comprend des microperforations pour amortir le bruit et un clapet pour permettre le gonflage et le dégonflage du pneumatique.

WO 2006/013681 A1 et DE 102 55 167 A1 divulguent des pneumatiques de sécurité comportant des éléments additionnels créant deux cavités pressurisées indépendantes dans la cavité interne du pneumatique.

Les systèmes précédents sont complexes et chers.

### Description de l'invention

Pour pallier ces inconvénients, l'invention propose un pneumatique comportant au moins un sommet prolongé par deux flancs et deux bourrelets dont la base est destinée à être montée sur un siège de jante, une structure de renfort de type carcasse ancrée dans les deux bourrelets et une couche additionnelle liée à la paroi interne du pneumatique, caractérisé en ce que ladite couche additionnelle est liée à la structure du pneumatique au niveau de ses bords et non-liée en-dehors, en ce qu'elle coopère avec la paroi interne du pneumatique pour former une cavité étanche à l'air et en ce que ladite couche additionnelle comprend une valve de gonflage.

De préférence, les bords de la couche additionnelle sont liés à la paroi interne du pneumatique entre l'équateur et les bourrelets du pneumatique.

Avantageusement, les bords de la couche additionnelle sont disposés au niveau des bourrelets.

Le fait que la couche additionnelle comporte une valve de gonflage et soit liée à la structure du pneumatique par ses bords permet à cette couche additionnelle d'être plaquée contre la jante après montage et gonflage du pneumatique. Cette couche additionnelle peut ainsi avoir un effet positif d'amortissement du bruit de roulement en roulage.

Le pneumatique selon l'invention a aussi l'avantage de pouvoir être monté sur une jante non-étanche et confère à l'ensemble pneumatique-jante ainsi constitué un comportement très proche de celui d'un ensemble tubeless classique en termes de résistance au roulement et de résistance à une crevaison.

Avantageusement, la longueur curviligne dans toute section axiale de la couche additionnelle ($L_{ca}$) est supérieure à la longueur curviligne dans cette section axiale de la paroi interne du pneumatique d'un équateur du pneumatique à l'autre ($L_{pe}$).

Cela garantit, et notamment lorsque la couche additionnelle est fixée à la paroi interne du pneumatique au niveau des bourrelets, qu'après montage sur une jante et gonflage la couche additionnelle présente une sur-longueur relativement à la section de la jante et s'applique contre la paroi de la jante en formant des plis. Ces plis donnent une surface irrégulière ce qui améliore la capacité d'absorption des bruits en roulage et notamment du premier mode de cavité.

Selon une caractéristique avantageuse, on

$$a : \quad \frac{L_{ca}}{L_{pe}} \succ 1{,}2 \quad \text{ou même :}$$

$$1 \prec \frac{L_{ca}}{L_{pe}} \prec 4 \, .$$

Selon un mode réalisation préférentiel, la couche additionnelle est une couche alvéolaire.

Le gain en bruit lié à ce mode de réalisation est très significatif. L'impact est supérieur à 4 dBA dans les zones du spectre correspondant aux pics du premier mode de cavité (PMC) et de l'ordre de 3 dBA globalement dans les fréquences entre 180 et 350 Hz relativement à un pneumatique sans couche alvéolaire appliquée contre la jante.

L'effet sur le bruit est encore plus positif si la couche alvéolaire est grande par rapport au pneumatique, ce qui fait que, même après gonflage, la surface de la couche alvéolaire n'est pas tendue mais est repliée. Ces plis font que la géométrie de la cavité est moins « régulière » et sont positifs dans l'absorption du bruit.

Selon un autre mode de réalisation, la couche additionnelle comporte une première couche en matériau alvéolaire et une seconde couche en matériau non-alvéolaire. De préférence, la couche en matériau alvéolaire est disposée entre la couche en matériau non-alvéolaire et la structure du pneumatique.

Avantageusement, la couche alvéolaire est majoritairement à cellules fermées.

L'épaisseur de la couche additionnelle peut être comprise entre 0,5 et 10 mm et de préférence entre 1 et 4 mm.

La densité de la couche alvéolaire peut être comprise entre 0,04 et 0,8 g/cm$^3$ et de préférence entre 0,06 et 0,3 g/cm$^3$.

L'invention a aussi pour objet un pneumatique tel que précédemment décrit, comprenant en plus un matériau auto-obturant disposé entre la structure du pneumatique et la couche additionnelle.

De préférence, le matériau auto-obturant est un liquide visqueux.

Avantageusement, le matériau auto obturant contient au moins l'un des constituants choisis dans le groupe constitué par le glycol, les fibres, les particules de caoutchouc vulcanisé, les particules de matériau cellulaire et leurs mélanges. Il a aussi de préférence une matrice fluide non-aqueuse, cela permet de limiter les problèmes éventuels de corrosion.

Le matériau auto obturant peut avoir préférentiellement une viscosité inférieure à 60 centipoises à 20°C.

Ce pneumatique à chambre intégrée a l'avantage de posséder de bonnes propriétés d'auto-obturation en cas de crevaison sans poser de problèmes de fabrication ou d'introduction de produits auto-obturants lors des crevaisons.

L'invention a aussi pour objet un ensemble monté constitué d'un pneumatique tel que précédemment décrit et d'une jante, caractérisé en ce que la valve du pneumatique est disposée dans le trou de valve de la jante. La jante peut avantageusement être une jante pour ensemble pneumatique et chambre à air.

L'invention a aussi pour objet un procédé de fabrication d'un pneumatique dans lequel :

- on dispose sur un tambour de fabrication une couche additionnelle de matériau ;
- on applique un agent anti-collant au niveau des zones de ladite couche destinées à ne pas être collées à la structure du pneumatique ;
- on applique une couche de matériau étanche ;
- on achève la confection de la structure du pneumatique ;
- on vulcanise le pneumatique ; et
- on fixe une valve de gonflage à la couche additionnelle.

L'agent anti-collant peut notamment être du talc ou de la craie.

De façon avantageuse, lorsque le matériau de la couche additionnelle comporte un agent moussant, après la vulcanisation du pneumatique on laisse s'opérer la phase d'expansion de la couche de matériau alvéolaire à pression ambiante.

Après avoir achevé la fabrication du pneumatique, on peut introduire entre la couche additionnelle et la paroi interne du pneumatique un matériau auto-obturant. Cette introduction peut être réalisée avant ou après la fixation d'une valve de gonflage.

## Description brève des dessins

Tous les détails de réalisation sont donnés dans la description qui suit, complétée par les figures 1 à 8, annexées à la présente, dans lesquelles :

- la figure 1 illustre le spectre type d'un véhicule roulant à 80 km/h ;
- la figure 2 illustre un exemple de pneumatique comportant une couche additionnelle selon l'invention ;
- la figure 3 illustre le pneumatique de la figure 2 monté sur sa jante de service et gonflé ;
- la figure 4 illustre schématiquement le gain obtenu avec une couche additionnelle alvéolaire selon l'invention ;
- la figure 5 illustre le procédé de collage de la couche alvéolaire sur un bourrelet;
- les figures 6, 7 et 8 donnent trois exemples d'agencements d'une couche additionnelle.

## Description détaillée de modes de réalisation

Dans ce qui suit, on entend par « section axiale » d'un pneumatique, toute section passant par l'axe de rotation du pneumatique ; et on entend par « section transversale » toute section perpendiculaire à l'axe de rotation du pneumatique.

La figure 1 présente un spectre type de l'amplitude du bruit en fonction de la fréquence mesuré dans un véhicule de tourisme roulant à 80 km/h. On note particulièrement les deux pics liés au premier mode de cavité autour de 230 Hz (flèche A). Ces deux pics sont très audibles et très gênants du point de vue du confort pour le conducteur ou un passager du véhicule.

La figure 2 présente un pneumatique 1 selon l'invention vu en section axiale partielle. Ce pneumatique comprend un sommet 2, deux flancs 3 prolongés par deux bourrelets 4. Une structure de renfort de type carcasse 5 est ancrée dans les deux bourrelets 4 autour des tringles 6. Ce pneumatique comprend une couche additionnelle 10 collée sur la paroi interne 8 du pneumatique au niveau des deux bourrelets 4 et décollée ailleurs, c'est-à-dire au niveau des flancs 3 et du sommet 2. Le lieu du collage de cette couche peut être disposé sur la paroi interne du pneumatique en toute zone des bourrelets ou des flancs jusqu'à l'équateur du pneumatique E. Une zone préférentielle est au niveau des bourrelets comme illustré à la figure 2. Cette couche 10 est dans l'exemple décrit une couche alvéolaire. C'est-à-dire qu'elle comporte des alvéoles internes, majoritairement fermées et remplies d'un gaz sous pression. De tels matériaux alvéolaires sont bien connus de l'homme du métier. La couche additionnelle 10 peut aussi ne pas être alvéolaire, dans ce cas les avantages en terme de réduction du bruit de roulage sont réduits. La couche additionnelle 10 comprend aussi une valve 11 destinée à permettre le gonflage de la cavité interne du pneumatique définie par la paroi interne et la couche additionnelle. C'est ce qui permet à la couche additionnelle d'être plaquée contre la jante 7 après montage sur une jante et gonflage et ainsi d'être efficace contre le bruit de roulement et notamment les pics du premier mode de cavité.

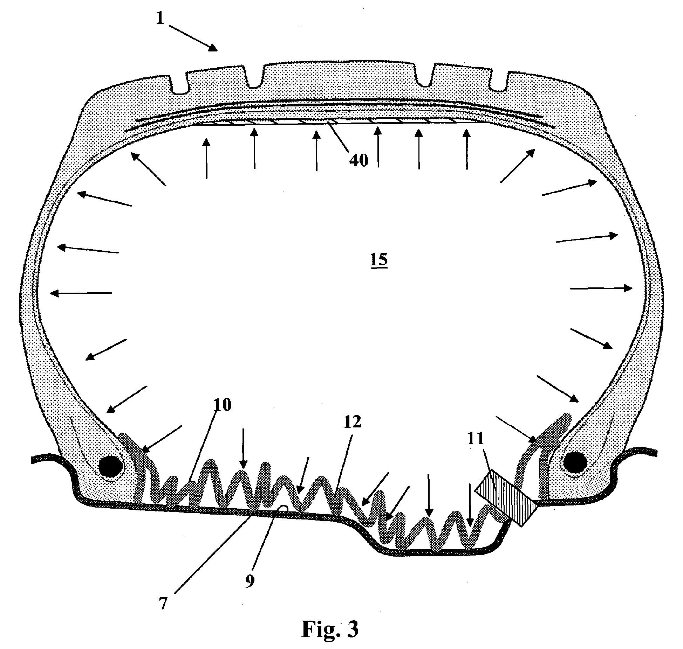

Une seconde caractéristique de cette couche alvéolaire 10 est que sa longueur curviligne dans toute section axiale et longitudinale du pneumatique est avantageusement supérieure à la longueur curviligne dans la même section axiale respectivement longitudinale de la paroi interne du pneumatique mesurée d'un équateur E à l'autre en passant par le sommet 2. Il en résulte que lorsque le pneumatique 1 selon l'invention est monté sur sa jante de service 7 et gonflé à sa pression de service, la couche additionnelle 10 est plaquée contre la paroi externe 9 de la jante 7 en faisant des plis 12 tel qu'illustré à la figure 3. La présence de ces plis donne à la paroi de la cavité pressurisée du pneumatique 15 au niveau de la jante 7 une surface irrégulière qui favorise l'amortissement des bruits de roulage. A la figure 3, les flèches illustrent l'action de la pression de gonflage sur la couche additionnelle 10 et la paroi du pneumatique. A cette figure 3, la valve 11 de la couche additionnelle est engagée dans le trou de valve de la jante 7.

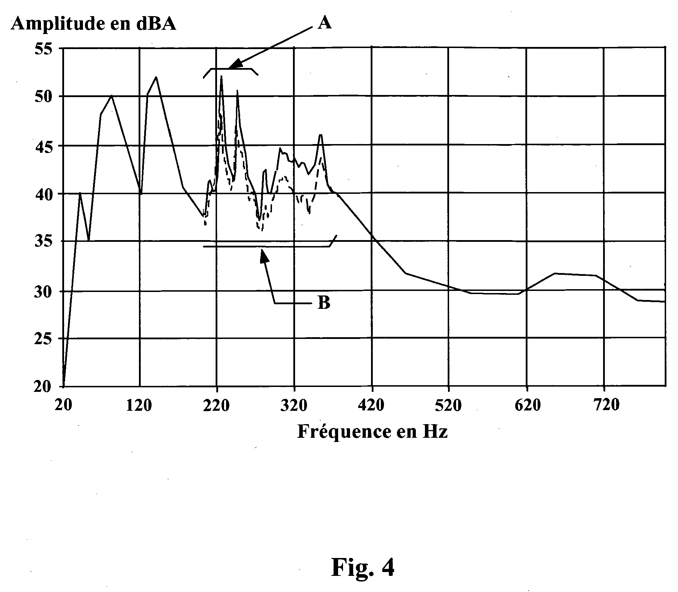

La figure 4 présente les résultats de mesure de bruit réalisés dans un véhicule roulant à 80 km/h sur un sol macro rugueux dans deux configurations :

- en trait plein : le véhicule est équipé de pneumatiques usuels gonflés à 2,3 bar ; et
- en trait pointillé : le même véhicule est équipé de pneumatiques selon l'invention comportant une couche additionnelle alvéolaire plaquée contre la paroi de la jante 7.

On note particulièrement un gain de 4 à 6 dBA sur les deux pics du premier mode de cavité (flèche A). Plus globalement, on note un gain de l'ordre de 3 dBA dans la gamme de fréquences [180 - 350] Hz, gamme de fréquence particulièrement sensible pour le confort (flèche B).

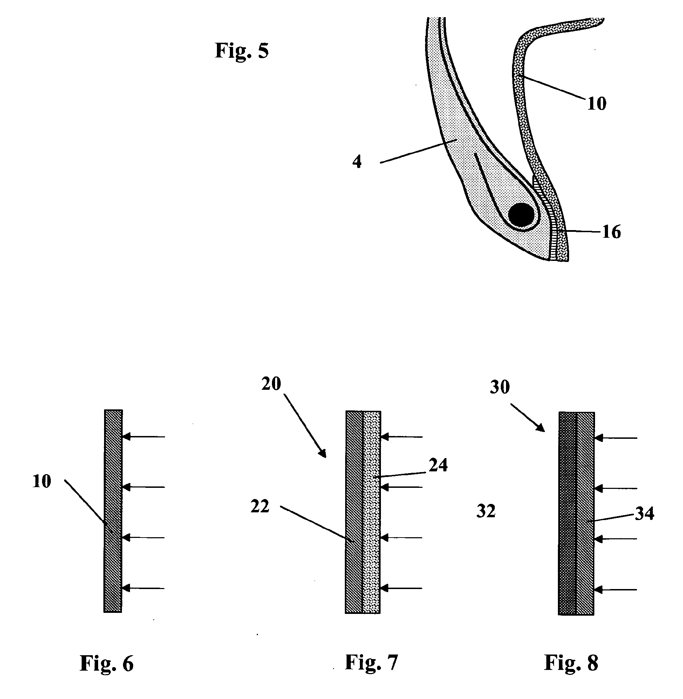

La figure 5 illustre la fixation de la couche additionnelle 10 sur la paroi interne du bourrelet 4. Cette fixation est assurée par la présence d'une couche 16 de matériau de collage.

Dans le cas préférentiel où la couche additionnelle comprend un matériau caoutchouc compatible avec la couche de gomme étanche constituant la paroi interne du pneumatique, la couche 16 n'est même pas nécessaire. Une liaison chimique de qualité suffisante se forme alors pendant la vulcanisation.

La figure 6 présente un mode de réalisation particulièrement simple de la couche additionnelle alvéolaire 10. Cette couche alvéolaire est constituée d'un matériau alvéolaire à alvéoles majoritairement fermées. Un exemple d'un tel matériau à base de caoutchouc butyl est décrit dans les documents des demanderesses EP 0 912 354 B1 et EP 1 155 801 B1.

La figure 7 présente un second mode de réalisation d'une couche additionnelle selon l'invention 20. Cette couche alvéolaire est constituée d'une première couche alvéolaire à alvéoles majoritairement fermées 22, de préférence réalisée avec un caoutchouc butyl comportant un agent moussant, et d'une seconde couche alvéolaire à alvéoles majoritairement ouvertes 24. Cette seconde couche 24 peut être constituée en modifiant les quantités d'agent moussant dans une seconde couche de matériau butyl pour donner après extension une majorité d'alvéoles ouvertes. La couche 24, comme l'indiquent les flèches, est disposée vers l'intérieur de la cavité pressurisée du pneumatique.

La figure 8 présente une troisième solution de couche additionnelle 30. Cette couche 30 comprend une première couche de gomme étanche non alvéolaire 32 et une seconde couche de gomme alvéolaire 34 en contact avec l'air de gonflage. De préférence les deux couches 32 et 34 sont réalisées à partir d'un caoutchouc butyl sans agent moussant pour la couche 32 et avec agent moussant pour la couche 34. L'intérêt de cette solution est de garantir une excellente étanchéité aux gaz de la couche alvéolaire 30.

La densité de la mousse peut aller de 0.04 gr/cm3 à 0.8 gr/cm$^3$. L'optimum entre la qualité d'absorption et la masse de l'ensemble monté est entre 0.06 et 0.3 gr/cm$^3$.

Les épaisseurs des couches additionnelles présentées aux figures 6, 7 et 8 peuvent être comprises entre 0,5 et 10 mm en fonction des applications et de leurs structures. Bien entendu, les épaisseurs des couches alvéolaires peuvent être supérieures à celles des couches qui ne le sont pas.

Le pneumatique illustré aux figures 2, 3, 5 et 6 comporte une couche additionnelle alvéolaire en caoutchouc butyl et pas de couche étanche en matériau compatible fixée continûment à la structure du pneumatique. Ce pneumatique est aisément réalisé en appliquant sur un tambour de fabrication usuel une première couche de caoutchouc butyl comportant un agent moussant, puis deux bandelettes de caoutchouc butyl sans agent moussant au niveau des bords de la couche précédente, en appliquant ensuite comme usuellement tous les autres constituants du pneumatique puis en le vulcanisant. Après la vulcanisation, les particules de gaz libérées par la chaleur entraînent une expansion de la couche additionnelle alvéolaire telle que ses dimensions axiales et longitudinales correspondent à ce qui est demandé pour obtenir une absorption satisfaisante du bruit de roulage. La couche additionnelle alvéolaire a alors une épaisseur et une densité appropriées pour aussi assurer une étanchéité suffisante vis-à-vis des gaz.

Lorsque le pneumatique comporte une couche étanche compatible avec le matériau de la couche additionnelle, par exemple lorsque les deux couches comportent du caoutchouc butyl par exemple, il convient d'ajouter un agent anti-collage pour garantir le décollage effectif de la couche additionnelle alvéolaire de la paroi en regard du pneumatique lors de la phase d'expansion de la couche additionnelle alvéolaire.

A la figure 3, on voit aussi disposé au niveau du sommet 2 du pneumatique 1 contre la paroi interne 8, une couche de matériau auto-obturant 40 destiné à favoriser l'obturation de trous liés à une éventuelle crevaison. Ce matériau est de préférence un liquide visqueux. Ce matériau auto obturant est de préférence à base d'un liquide non aqueux et comporte au moins l'un des composants suivants : du glycol, des fibres, des particules de gomme cuite, des particules de matériau cellulaire. Sa viscosité est préférentiellement inférieure à 60 centipoises à 20°C. On peut l'introduire dans la cavité 15 formée par la paroi interne du pneumatique et la couche additionnelle 10 avant ou après avoir fixé la valve de gonflage 11 à la couche additionnelle.

L'invention n'est pas limitée aux exemples décrits et représentés et diverses modifications peuvent y être apportées sans sortir de son cadre défini par les revendications annexées.

## Revendications

1. Pneumatique comportant au moins un sommet prolongé par deux flancs et deux bourrelets dont la base est destinée à être montée sur un siège de jante, une structure de renfort de type carcasse ancrée dans les deux bourrelets et une couche additionnelle liée à la paroi interne du pneumatique, **caractérisé en ce que** ladite couche additionnelle est liée à la structure du pneumatique au niveau de ses bords et non-liée en-dehors, **en ce qu'**elle coopère avec la paroi interne du pneumatique pour former une cavité étanche à l'air, **en ce que** ladite couche additionnelle comprend une valve de gonflage et **en ce que**, après montage sur une jante et gonflage du pneumatique, ladite couche additionnelle est plaquée contre ladite jante.

2. Pneumatique selon la revendication 1, dans lequel les bords de la couche additionnelle sont liés à la paroi interne du pneumatique entre l'équateur et les bourrelets du pneumatique.

3. Pneumatique selon la revendication 2, dans lequel les bords de la couche additionnelle sont disposés au niveau des bourrelets.

4. Pneumatique selon l'une des revendications 1 à 3, dans lequel la longueur curviligne dans toute section axiale de la couche additionnelle ($L_{ca}$) est supérieure à la longueur curviligne dans ladite section axiale de la paroi interne du pneumatique d'un équateur du pneumatique à l'autre ($L_{pe}$).

5. Pneumatique selon la revendication 4, dans lequel on a :

$$\frac{L_{ca}}{L_{pe}} \succ 1,2$$

6. Pneumatique selon la revendication 4, dans lequel on a :

$$1 \prec \frac{L_{ca}}{L_{pe}} \prec 4$$

7. Pneumatique selon l'une quelconque des revendications 1 à 6, dans lequel la couche additionnelle est une couche alvéolaire.

8. Pneumatique selon l'une quelconque des revendications 1 à 6, dans lequel la couche additionnelle comporte une première couche en matériau alvéolaire et une seconde couche en matériau non-alvéolaire.

9. Pneumatique selon la revendication 8, dans lequel la couche en matériau alvéolaire est disposée entre la couche en matériau non-alvéolaire et la structure du pneumatique.

10. Pneumatique selon l'une des revendications 7 à 9, dans lequel la couche alvéolaire est majoritairement à cellules fermées.

11. Pneumatique selon l'une quelconque des revendications 1 à 10, dans lequel l'épaisseur de la couche additionnelle est comprise entre 0,5 et 10 mm.

**12.** Pneumatique selon la revendication 11, dans lequel l'épaisseur de la couche additionnelle est comprise entre 1 et 4 mm.

**13.** Pneumatique selon l'une quelconque des revendications 7 à 12, dans lequel la densité de la couche additionnelle en matériau alvéolaire est comprise entre 0,04 et 0,8 g/cm$^3$.

**14.** Pneumatique selon la revendication 13, dans lequel la densité de la couche additionnelle en matériau alvéolaire est comprise entre 0,06 et 0,3 g/cm$^3$.

**15.** Pneumatique selon l'une quelconque des revendications précédentes, comprenant en plus un matériau auto-obturant disposé entre la structure du pneumatique et la couche additionnelle.

**16.** Pneumatique selon la revendication 15, dans lequel le matériau auto-obturant est un liquide visqueux.

**17.** Pneumatique selon la revendication 16, dans lequel le matériau auto obturant contient au moins l'un des constituants choisis dans le groupe constitué par le glycol, les fibres, les particules de caoutchouc vulcanisé, les particules de matériau cellulaire et leurs mélanges.

**18.** Pneumatique selon l'une des revendications 16 et 17, dans lequel le matériau auto obturant a une matrice fluide non-aqueuse.

**19.** Pneumatique selon l'une des revendications 16 à 18, dans lequel le matériau auto obturant a une viscosité inférieure à 60 centipoises à 20°C.

**20.** Ensemble monté constitué d'un pneumatique selon l'une quelconque des revendications précédentes et d'une jante, **caractérisé en ce que** la valve du pneumatique est disposée dans le trou de valve de la jante.

**21.** Ensemble monté selon la revendication 20, dans lequel la jante est une jante pour ensemble pneumatique et chambre à air.

**Patentansprüche**

**1.** Reifen, aufweisend mindestens einen von zwei Flanken verlängerten Scheitel und zwei Wülste, deren Basis dafür vorgesehen ist, an einem Sitz einer Felge montiert zu werden, eine Verstärkungsstruktur der Art einer Karkasse, welche in den beiden Wülsten verankert ist, und eine zusätzliche Schicht, welche mit der Innenwand des Reifens verbunden ist, **dadurch gekennzeichnet, dass** die zusätzliche Schicht mit der Struktur des Reifens im Bereich ihrer Ränder verbunden und außerhalb davon nicht-verbunden ist, dass sie mit der Innenwand des Reifens zusammenwirkt, um einen dichten Luft-Hohlraum zu bilden, dass die zusätzliche Schicht ein Auffüllventil aufweist und dass nach Montage auf einer Felge und Auffüllen des Reifens die zusätzliche Schicht gegen die Felge gedrückt wird.

**2.** Reifen nach Anspruch 1, bei welchem die Ränder der zusätzlichen Schicht mit der Innenwand des Reifens zwischen dem Äquator und den Wülsten des Reifens verbunden sind.

**3.** Reifen nach Anspruch 2, bei welchem die Ränder der zusätzlichen Schicht im Bereich der Wülste angeordnet sind.

**4.** Reifen nach einem der Ansprüche 1 bis 3, bei welchem die Länge der gekrümmten Linie im gesamten axialen Querschnitt der zusätzlichen Schicht ($L_{ca}$) größer als die Länge der gekrümmten Linie im axialen Querschnitt der Innenwand des Reifens von einem Äquator des Reifens zum anderen ($L_{pe}$) ist.

**5.** Reifen nach Anspruch 4, bei dem sich ergibt:

$$\frac{L_{ca}}{L_{pe}} > 1,2$$

**6.** Reifen nach Anspruch 4, bei dem sich ergibt:

$$1 < \frac{L_{ca}}{L_{pe}} < 4$$

**7.** Reifen nach einem der Ansprüche 1 bis 6, bei welchem die zusätzliche Schicht eine Schaumstoffschicht ist.

**8.** Reifen nach einem der Ansprüche 1 bis 6, bei welchem die zusätzliche Schicht eine erste Schicht aus Schaumstoffmaterial und eine zweite Schicht aus ungeschäumtem Material aufweist.

**9.** Reifen nach Anspruch 8, bei welchem die Schicht aus Schaumstoffmaterial zwischen der Schicht aus ungeschäumtem Material und der Struktur des Reifens angeordnet ist.

**10.** Reifen nach einem der Ansprüche 7 bis 9, bei welchem die Schaumstoffschicht mehrheitlich aus geschlossenen Zellen besteht.

**11.** Reifen nach einem der Ansprüche 1 bis 10, bei welchem die Dicke der zusätzlichen Schicht zwischen 0,5 und 10 mm liegt.

**12.** Reifen nach Anspruch 11, bei welchem die Dicke der zusätzlichen Schicht zwischen 1 und 4 mm liegt.

**13.** Reifen nach einem der Ansprüche 7 bis 12, bei welchem die Dichte der zusätzlichen Schicht aus Schaumstoffmaterial zwischen 0,04 und 0,8 g/cm$^3$ liegt.

**14.** Reifen nach Anspruch 13, bei welchem die Dichte der zusätzlichen Schicht aus Schaumstoffmaterial zwischen 0,06 und 0,3 g/cm$^3$ liegt.

**15.** Reifen nach einem der vorhergehenden Ansprüche, zusätzlich aufweisend ein selbst verschließendes Material, welches zwischen der Struktur des Reifens und der zusätzlichen Schicht angeordnet ist.

**16.** Reifen nach Anspruch 15, bei welchem das selbst verschließende Material eine viskose Flüssigkeit ist.

**17.** Reifen nach Anspruch 16, bei welchem das selbst verschließende Material mindestens einen der Bestandteile enthält, welcher aus der Gruppe ausgewählt wird, die aus Glykol, Fasern, den Partikeln von vulkanisiertem Kautschuk, den Partikeln von Zellmaterial und ihren Gemischen besteht.

**18.** Reifen nach einem der Ansprüche 16 und 17, bei welchem das selbst verschließende Material eine fluide, nicht wässrige Matrix besitzt.

**19.** Reifen nach einem der Ansprüche 16 bis 18, bei welchem das selbst verschließende Material eine Viskosität von kleiner als 60 Zentipoise bei 20°C besitzt.

**20.** Montierte Baugruppe, welche von einem Reifen nach einem der vorhergehenden Ansprüche und einer Felge gebildet wird, **dadurch gekennzeichnet, dass** das Ventil des Reifens im Ventilloch der Felge angeordnet ist.

**21.** Montierte Baugruppe nach Anspruch 20, bei welcher die Felge eine Felge für Reifen und Luftkammer zugleich ist.

**Claims**

**1.** Tire comprising at least one crown extended by two sidewalls and two beads, the base of which is intended to be mounted onto a rim seat, a carcass-type reinforcing structure anchored into the two beads and an additional layer bonded to the inner wall of the tire, **characterized in that** said additional layer is bonded to the tire structure at its edges and the rest is not bonded, **in that** it cooperates with the inner wall of the tire to form an airtight cavity, **in that** said additional layer comprises an inflation valve and **in that**, after mounting on a rim and inflating the tire, said additional layer is flattened against the rim.

**2.** Tire according to Claim 1, in which the edges of the additional layer are bonded to the inner wall of the tire between the equator and the beads of the tire.

**3.** Tire according to Claim 2, in which the edges of the additional layer are positioned at the beads.

**4.** Tire according to one of Claims 1 to 3, in which the curved length in any axial cross section of the additional layer ($L_{ca}$) is greater than the curved length in said axial cross section of the inner wall of the tire from one equator of the tire to the other ($L_{pe}$).

**5.** Tire according to Claim 4, in which:

$$\frac{L_{ca}}{L_{pe}} \succ 1.2$$

**6.** Tire according to Claim 4, in which:

$$1 \prec \frac{L_{ca}}{L_{pe}} \prec 4$$

**7.** Tire according to any one of Claims 1 to 6, in which the additional layer is a cellular layer.

**8.** Tire according to any one of Claims 1 to 6, in which the additional layer comprises a first layer made of a cellular material and a second layer made of a non-cellular material.

**9.** Tire according to Claim 8, in which the cellular material layer is positioned between the non-cellular material layer and the tire structure.

**10.** Tire according to one of Claims 7 to 9, in which the cellular layer is a predominantly closed-cell cellular layer.

**11.** Tire according to any one of Claims 1 to 10, in which the thickness of the additional layer is between 0.5 and 10 mm.

**12.** Tire according to Claim 11, in which the thickness of the additional layer is between 1 and 4 mm.

**13.** Tire according to any one of Claims 7 to 12, in which the density of the additional layer made of cellular material is between 0.04 and 0.8 g/cm$^3$.

**14.** Tire according to Claim 13, in which the density of the additional layer made of cellular material is between 0.06 and 0.3 g/cm$^3$.

**15.** Tire according to any one of the preceding claims, comprising, in addition, a self-sealing material positioned between the tire structure and the additional layer.

**16.** Tire according to Claim 15, in which the self-sealing material is a viscous liquid.

**17.** Tire according to Claim 16, in which the self-sealing material contains at least one of the constituents chosen from the group composed of glycol, fibers, vulcanized rubber particles, cellular material particles and mixtures thereof.

**18.** Tire according to either of Claims 16 and 17, in which the self-sealing material has a non-aqueous fluid matrix.

**19.** Tire according to one of Claims 16 to 18, in which the self-sealing material has a viscosity of less than 60 centipoise at 20°C.

**20.** Mounted assembly consisting of a tire according to any one of the preceding claims and a rim, **characterized in that** the tire valve is positioned in the valve hole of the rim.

**21.** Mounted assembly according to Claim 20, in which the rim is a rim for a tire/inner tube assembly.

A

Bruit dBA

fréquence

0

1000 Hz

**Fig. 1**

1

2

3

8

3

E

E

5

10

11

4

4

6

6

**Fig. 2**

**Fig. 3**

**Fig. 4**

**Fig. 5**

4

10

16

20

10

22

24

**Fig. 6**

**Fig. 7**

30

32

34

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1214205 B1
- US 6343843 B
- US 20010004924 A
- US 4252378 A
- EP 1510366 A1
- DE 10220193
- WO 2006013681 A1
- DE 10255167 A1
- EP 0912354 B1
- EP 1155801 B1